# EUROPÄISCHE PATENTANMELDUNG

(11) **EP 4 624 094 A1**
(43) Veröffentlichungstag der Anmeldung: **01.10.2025**
(21) Anmeldenummer: 24167302.9
(22) Anmeldetag: 28.03.2024
(51) Int. Cl.: B23Q 7/14, B62D 65/18, B65G 35/06

(54) **FÖRDERSYSTEM FÜR EINE INDUSTRIELLE FERTIGUNGSANLAGE**

(71) Anmelder: Siemens Aktiengesellschaft, 80333 München (DE)
(72) Erfinder: Trupp, Martin, 07387 Krölpa (DE); Walther, Steven, 07318 Saalfeld (DE)
(74) Vertreter: Siemens Patent Attorneys

(57) **Zusammenfassung**

Die Erfindung betrifft ein Fördersystem für eine industrielle Fertigungsanlage, mit einer Förderstrecke, die mit einem stationär angetriebenen linearen Fördermittel (27), insbesondere mit zumindest einem in Förderrichtung erstreckten Zahnriemen oder Kette, versehen ist, wobei mittels des Fördermittels (27) ein Bauteilträger (21) entlang der Förderstrecke bewegbar ist. Dabei ist der Bauteilträger (21) formschlüssig mit dem Fördermittel (27) verbindbar und vom Fördermittel (27) entkoppelbar, wobei eine stationäre Verriegelungseinheit (23) an der Förderstrecke vorgesehen ist, und wobei die Verriegelungseinheit (23) zum Entkoppeln des Bauteilträgers von dem Fördermittel (27) und zum Feststellen des Bauteilträgers (21) in einer fixierten Position in einem Arbeitszug eingerichtet ist. Mittels dieses Fördersystems kann der Bauteilträger mit einem zu bearbeitenden Bauteil exakt an der richtigen Stelle einer Bearbeitungsstation und unabhängig von Schlupf und Schwingungen des Fördermittels fixiert werden, wobei für die Bearbeitungsdauer das Fördermittel für andere Transportaufgaben weitergenutzt werden kann und wobei verschleißarm hohe Beschleunigungs- und Verzögerungsraten erreichbar sind. Zudem ist durch die Verriegelungseinheit eine Übergabe des Bauteilträgers an ein anderes Segment der Förderstrecke möglich, ohne dass dabei der Bauteilträger zwischenzeitlich ungeführt ist.

## Beschreibung

Die Erfindung betrifft eine Hochleistungsförderanlage für getaktete Fertigungsstraßen, insbesondere ein Fördersystem für eine industrielle Fertigungsanlage gemäß dem Oberbegriff des Patentanspruchs 1.

In einer beispielsweise automobilen Serienfertigung werden stationsweise verschiedene Arbeitsinhalte im Fließ- oder Taktbetrieb, zumeist halb- oder vollautomatisiert, realisiert. Ein essenzielles Ziel der Serienfertigung im Taktbetrieb ist es, die Taktwechselzeit so gering wie möglich zu halten, da während eines dazwischen liegenden Fördervorgangs keine Bearbeitung am Bauteil erfolgt. Um das Bauteil stationsweise zu transportieren, wird dieses in der Regel auf einem Bauteilträger platziert.

Bei der Bearbeitung müssen Bauteile regelmäßig stillstehen oder gar fixiert sein. Gleichzeitig werden aber nicht alle Bauteile in einer Fabrik gleichzeitig bearbeitet bzw. gleichzeitig transportiert und zudem sind die Transportwege zwischen Bearbeitungsstationen meist unterschiedlich lang. Dies bedingt, dass entweder Bauteile bzw. die unterlagerten Bauteilträger für die Zeit ihrer Bearbeitung vom Fördersystem entkoppelt werden müssen, oder eine Förderstrecke muss segmentiert werden und für jede Bearbeitungsstation wird ein eigenes separat steuerbares und insbesondere stoppbares Segment vorgesehen.

Die horizontalen Förderaufgaben werden oftmals mit friktionsbasierenden Ketten-/ Riemen- oder Rollenfördervorrichtungen umgesetzt, da diese durch ihre einfache und robuste Bauweise eine wirtschaftliche Lösung darstellen. Jedoch kommen diese Fördervorrichtungen aufgrund des friktionsbasierenden Wirkprinzips bei hohen Beschleunigungen oder Verzögerungen an ihre Grenzen. Werden die Beschleunigungs- oder Verzögerungskräfte zu groß, reicht der Reib- bzw. Kraftschluss zwischen den Materialpaarungen nicht mehr aus, um ein Rutschen des Bauteilträgers auf den tragenden Antriebselementen zu verhindern. Das prozesssichere Positionieren des Bauteiles kann somit nicht mehr gewährleistet werden.

Ein weiteres Problem resultiert daraus, dass beim gleichzeitigen Transport mehrerer Bauteile das Energieversorgungsnetz durch hohe Einschaltströme beim Anfahren zu stark belastet wird. Daher werden die Antriebe der Fördervorrichtungen, insbesondere der hintereinander angeordneten Segmente der Förderstrecke, oftmals zeitlich versetzt gestartet. Da der Bauteilträger beim Überfördern einer Stoßstelle zwischen zwei Segmenten Kontakt zu beiden Förderern der beiden betroffenen Segmente aufweist, müssen die Drehzahlen beziehungsweise die Geschwindigkeit der lasttragenden Antriebselemente zueinander synchronisiert werden, da es sonst zum Schlupf kommt, was sich negativ auf den gesamten Antrieb als auch auf die Antriebselemente auswirken würde. Beeinflusst wird dieses Verhältnis durch die Länge des Bauteilträgers sowie des Förderers und durch das projektierte Fahrprofil. Ebenfalls muss ein Mindestabstand der Bauteilträger zueinander eingehalten werden, sodass im Störungsfall ein Auffahren vermieden und ein kollisionsfreies Anhalten gewährleistet werden kann.

Damit wirkt sich die Synchronisierungsanforderung und die damit einhergehende Korrelation der Antriebe bei diesem Transportprinzip negativ auf die Taktzeit der Gesamtanlage aus. Zudem kann die Synchronisierung ungewünschte Lastspitzen im Energiehaushalt des Fördersystems durch die Kumulation von Anlaufströmen verursachen.

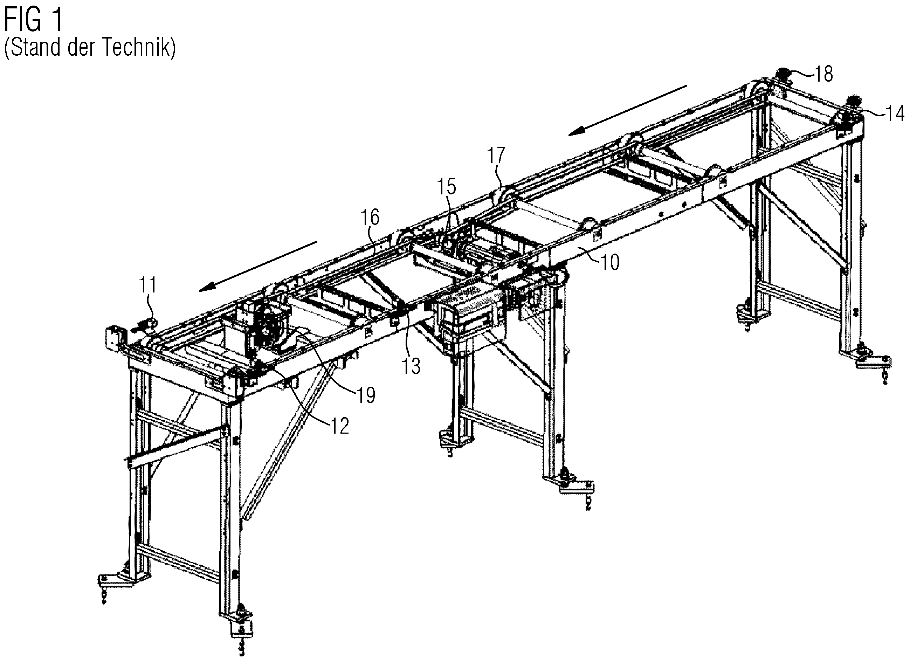

In der Figur 1 ist eine Rollenfördervorrichtung aus dem Stand der Technik gezeigt, mit einem Grundrahmen 10 und sechs Tragrollen 17 dargestellt, bei der letztere über Zahnriemen 16 mit einem elektromotorischen Antrieb 15 gekoppelt sind. Die eingezeichneten Pfeile visualisieren hier die Förderrichtung. Die seitliche Führung des Bauteilträgers hier nicht dargestellt erfolgt bei dieser Ausführungsvariante mittels seitlicher Anlaufscheiben an den Tragrollen 17 und einlaufseitig mittels zweier Führungsrollen 18, die sich an die Außenseite des Bauteilträgers anlegen und diesen zentrieren. Als Sicherheitseinrichtung dient hier ein Überfahrschutz 19, der das Überfahren des Bauteilträgers im Fehlerfall mechanisch verhindert. Eine zusätzliche Vorrichtung zum Abstecken der Position des Bauteilträgers ist regelmäßig vorzusehen, in der Figur 1 aber nicht dargestellt.

Die Positionserfassung des Bauteilträgers erfolgt in der Regel über externe Sensorik 11- 14. Die Sensorik besteht aus mindestens einem Sensor 12, der die Halteposition erfasst, einem weiteren Sensor 13, der das Signal zur Umschaltung zwischen einer maximal projektierten Fördergeschwindigkeit und einer zweiten langsameren Geschwindigkeit gibt, auch Eilgang-/ Schleichgang- Umschaltung genannt, und einem Sensor 11, der das Signal zum Abschalten des Antriebs gibt. Sollte der Bauteilträger die Halteposition überfahren, wird dies durch einen weiteren Sensor 14 erfasst.

Sobald von der übergeordneten Steuerung das Signal zum Einfördern in die Station gegeben wird, startet der Antrieb auf seine maximale, applizierte Drehzahl und verzögert seine Bewegung erst, wenn von dem Eilgang-/ Schleichgang- Sensor das Signal gemeldet wird und schaltet mittels des Signals vom letzten Sensor den Antrieb schließlich vollständig ab. Die so angefahrene Halteposition kann für die meisten vollautomatisierten Arbeitsinhalte aufgrund der oftmals ungenauen Positionsbestimmung des Bauteilträgers und des schlupfbehafteten Antriebskonzepts nicht genutzt werden, weshalb eine zusätzliche Absteckung der Bearbeitungsposition erfolgen muss.

Eine aus dem Stand der Technik bekannte Lösung für die zuvor beschriebenen Probleme, stellt ein Fördersystem dar, welches mittels mehrerer, aneinandergereihter, permanenterregter Synchronlinearmotoren die Antriebsbewegung des Bauteilträgers segmentweise umsetzt. Bei einer solchen Lösung werden die stromführenden Primärteile der Synchronmotoren in einem festgelegten Raster an einer stationären Tragstruktur und die Sekundärteile mit Permanentmagneten ebenfalls in einem festgelegten Raster an den Bauteilträgern befestigt. Der Bauteilträger ist bei der gezeigten Variante mit lasttragenden Rollen ausgeführt, die wiederum über seitlich angebrachte Bordscheiben verfügen, um eine seitliche Führungsfunktion zu gewährleisten. Die für die Antriebsregelung benötigen Lageinformationen von Primär- zum Sekundärteil der Synchronmotoren werden durch ein externes Wegmesssystem geliefert, was gleichzeitig zur Positionsbestimmung der Bauteilträger genutzt wird. Jedoch bringt diese Lösungen einige Nachteile mit sich.

Jene externen Wegmesssysteme sind kostenaufwändig und schwingungsanfällig, was besonders in rauen Fertigungsumgebungen, wie sie beispielsweise in der automobilen Serienfertigung vorherrschen, zu Prozessstörungen führen kann. Die hohen Anziehungskräfte zwischen Primär- und Sekundärteil bedingen stabile Tragstrukturen, was sich gerade auf die Flexibilität der konstruktiven Gestaltung der Bauteilträger negativ auswirkt. Durch die konstruktionsbedingte offene Bauweise sind ferromagnetische Verschmutzungen nicht vermeidbar, wodurch regelmäßige Wartungsaufgaben entstehen. Ebenso wird dadurch die Flexibilität der Rückführungsstrecke der Bauteilträger eingeschränkt. Durch die große Anzahl an Synchron- Linearmotoren und Wegmesstechnik sind die Anschaffungskosten für das gesamte Fördersystem sehr hoch.

Der Erfindung liegt die Aufgabe zu Grunde, eine kostengünstige, flexible und zuverlässige Hochleistungsförderanlage für getaktete Fertigungsstraßen zu schaffen, die große Massen in sehr kurzer Zeit prozesssicher zwischen den Bearbeitungsstationen transportiert und wiederholgenau positioniert.

Die hier vorliegende Erfindung zeigt eine Lösung für die aufgezeigten Probleme auf, welche auf einem stationszugeordneten Mitnehmerprinzip basiert, wobei der von einem linearen Fördermittel Zahnriemen, Kette oder dergleichen angetriebene Mitnehmer formschlüssig mit dem Bauteilträger in Verbindung steht und dessen Position mittels eines Wegmesssystems direkt oder indirekt erfasst wird. Innerhalb der Bearbeitungsstationen erfolgt die Übergabe des Bauteilträgers mittels einer Zustellbewegung mittelbar oder unmittelbar auf den Mitnehmer der nächsten Station und somit auf den Mitnehmer des nächsten Segments der Förderstrecke.

Die Aufgabe wird insbesondere durch ein Fördersystem gemäß Patentanspruch 1 gelöst. Dabei wird ein Fördersystem für eine industrielle Fertigungsanlage vorgeschlagen, das mit einer Förderstrecke, die mit einem stationär angetriebenen linearen Fördermittel, insbesondere mit zumindest einem in Förderrichtung erstreckten Zahnriemen, oder einer Kette, versehen ist, wobei mittels des Fördermittels ein Bauteilträger entlang der Förderstrecke bewegbar ist. Dabei ist der Bauteilträger formschlüssig mit dem Fördermittel verbindbar und vom Fördermittel entkoppelbar, wozu eine stationäre Verriegelungseinheit an der Förderstrecke vorgesehen ist, wobei die Verriegelungseinheit zum Entkoppeln des Bauteilträgers von dem Fördermittel und zum Feststellen des Bauteilträgers in einer fixierten Position in einem Arbeitszug eingerichtet ist. Mittels dieses Fördersystems kann der Bauteilträger mit einem zu bearbeitenden Bauteil exakt an der richtigen Stelle einer Bearbeitungsstation und unabhängig von Schlupf und Schwingungen des Fördermittels fixiert werden, wobei für die Bearbeitungsdauer das Fördermittel für andere Transportaufgaben weitergenutzt werden kann und wobei verschleißarm hohe Beschleunigungs- und Verzögerungsraten erreichbar sind. Zudem ist durch die Verriegelungseinheit eine Übergabe des Bauteilträgers an ein anderes Segment der Förderstrecke möglich, ohne dass dabei der Bauteilträger zwischenzeitlich ungeführt ist.

Vorteilhafte Ausgestaltungen des Fördersystems sind in den abhängigen Patentansprüchen angegeben. Deren Merkmale und Vorteile können sowohl einzeln als auch in sinnfälliger Kombination realisiert werden.

Vorteilhaft ist die Verriegelungseinheit zum Ankoppeln des Bauteilträgers an das Fördermittel und zur Freigabe des Bauteilträgers aus der fixierten Position in einem Arbeitszug eingerichtet. Damit kann der Bauteilträger wieder zurück in den Transportbetrieb überführt. Durch die Ausführung des Ankoppelns und der Freigabe in einem Zug kann die Verriegelungseinheit mit einem einzigen Aktor konstruiert werden, zudem ist damit zwangsweise sichergestellt, dass mit dem Ankoppeln auch die Freigabe erfolgt; umgekehrt gilt das auch für den Vorgang des Entkoppelns im gleichen Arbeitszug wie das Feststellen.

Besonders vorteilhaft ist die Verriegelungseinheit derart ausgestaltet, dass während eines Abkoppelns und Feststellens des Bauteilträgers und/oder während eines Ankoppelns und Freigabe des Bauteilträgers eine ununterbrochene formschlüssige Führung des Bauteilträgers gegeben ist. Somit ist eine ungewollte Bewegung des Bauteilträgers ausgeschlossen.

In einer vorteilhaften Ausgestaltung besteht das Fördersystem aus mehreren miteinander verketteten Segmenten einer Förderstrecke, wobei jedes Segment mit dem oder einem anderen stationären angetriebenen linearen Fördermittel versehen ist, wobei die stationäre Verriegelungseinheit an einer Verbindungsstelle zweier Segmente derart angeordnet ist, dass eine Verbindung oder Entkopplung des Bauteilträgers wahlweise mit oder von einem ersten oder zweiten der beiden Segmente des Fördermittels möglich ist, wobei eine Übergabe des Bauteilträgers zwischen den Segmenten vorgesehen ist, und wobei zwischen der formschlüssigen Verbindung des Bauteilträgers mit dem ersten und dem zweiten Segment eine Feststellung des Bauteilträgers vorgesehen ist. Somit ist an einer überlappenden Stelle oder Stoßstelle zweier Segmente eine Übergabe des Bauteilträgers und somit des Transportgutes - in der Regel ein zu bearbeitendes Bauteil - sicher möglich, ohne dass die Fördermittel der Segmente synchronisiert werden müssen. Es muss lediglich sichergestellt werden, dass das Fördermittel, von welchem gerade abgekoppelt wird, für diesen Vorgang gestoppt oder zumindest verlangsamt wird; gleiches gilt für das Fördermittel, an das später angekoppelt wird, eben auch nur für den Zeitpunkt des Ankoppelns. Somit können Anfahr- und Bremsvorgänge und die daraus resultierenden Betriebsströme zeitlich entkoppelt werden und Lastspitzen in Folge von zeitlicher Korrelation dieser Vorgänge vermieden werden.

Zur Feststellung des Bauteilträgers wird vorteilhaft eine formschlüssige Verbindung des Bauteilträgers mit der Verriegelungseinheit oder mit einem feststehenden Bauteil der Förderstrecke, insbesondere mit einem Tragrahmen der Förderstrecke, vorgenommen, so dass die bei einer Bearbeitung eines geförderten Bauteils auftretenden Kräfte nicht in das Fördermittel eingeleitet werden, sondern in eine Tragstruktur und somit unmittelbar in ein Fundament der Fertigungsanlage.

Die Verriegelungseinheit umfasst im Wesentlichen ein bewegbares Bauteil, insbesondere einen quer zur Fahrtrichtung des Bauteilträgers angeordneten Schieber, auf, wobei das Bauteil zum An- oder Abkoppeln an ein Verbindungsmittel des Bauteilträgers, insbesondere einem Zapfen, ausgestaltet ist, und wobei das Bauteil zum Ab- oder Ankoppeln eines Mitnehmers des Fördermittels an das oder ein anderes Verbindungsmittel des Bauteilträgers in demselben Bewegungsvorgang ausgestaltet ist. Dadurch, dass beide Vorgänge von einem gemeinsamen Bauteil bewerkstelligt werden, ist die Durchführung der beiden Vorgänge in einem gemeinsamer Arbeitszug zwangsläufig gegeben, was die Betriebssicherheit erhöht.

Insbesondere bei langen Förderstrecken und schweren Transportgütern ist die Positioniergenauigkeit beim Stopp der Bewegung eingeschränkt, zumal bei der Nutzung von antriebsseitigen Bewegungserfassungssystemen bzw. Positionserfassungssystemen die anlagenimmanenten Toleranzen und Schwingungen nicht ausgeregelt werden können. Die Verrieglungseinheit weist daher vorteilhaft einen in Bezug auf die Längsrichtung des Förderers bezogenen Fangbereich auf, wobei der Fangbereich zum Ausgleich von Positionierungstoleranzen des Bauteilträgers zum Zeitpunkt des Feststellens des Bauteilträgers und/oder zum Ausgleich von Positionierungstoleranzen des Fördermittels zum Zeitpunkt des Ankoppelns des Bauteilträgers an das Fördermittel eingerichtet ist. Der Fangbereich überschreitet dabei jedoch nicht die aus dem Bearbeitungsprozess geforderten Positions- bzw. Lagetoleranzen des Bauteilträgers in Förderrichtung. Damit werden separate Abstecker oder Anschläge eingespart, zumal diese und die damit gestoppten Bauteilträger und deren Last oft erheblichen mechanischen Impulsen ausgesetzt sind. In einer vorteilhaften Variante kann die Verriegelungseinheit mit einem Dämpfungssystem ausgestattet sein, um die beim Einrasten auftretenden mechanischen Stöße aufzufangen.

Das Fördersystem verfügt vorteilhaft über einen Energiespeicher, wobei der Energiespeicher zur zumindest teilweisen Speicherung der Bewegungsenergie des Bauteilträgers im Zuge eines Verzögerungsvorgangs vor einer Verbindung mit der Verriegelungseinheit eingerichtet ist, und wobei der Energiespeicher zur Einleitung der gespeicherten Energie nach dem Ankoppeln des Bauteilträgers an das oder ein Fördermittel eingerichtet ist, und wobei zur Steuerung des Zeitpunktes des Beginns der Einleitung der Energie ein Sensor an der Verriegelungseinheit zur Abtastung des Kopplungszustandes der Verriegelungseinheit vorgesehen ist. Somit kann die vom Netz bezogene Spitzenlast verringert und das Energieversorgungssystem kostengünstiger ausgelegt werden.

Vorteilhaft weist die Fördersystem einen variablen Vortrieb des Fördermittels auf, wobei der variable Vortrieb so gesteuert ist, dass das Fördermittel zum Zeitpunkt des Verbindens des Bauteilträger mit der Verriegelungseinheit und zum Zeitpunkt des Koppelns des Bauteilträger an das Fördermittel stillsteht. Somit werden sowohl elektrische als auch mechanische Lastspitzen verringert.

Ein Ausführungsbeispiel des erfindungsgemäßen Fördersystems wird nachfolgend anhand der Zeichnungen erläutert.

Dabei zeigen:
- Figur 2: ein erfindungsgemäßes Fördersystem nachfolgend auch als Fördervorrichtung bezeichnet in einer dreidimensionalen Ansicht,
- Figur 3: das Fördersystem in einer detaillierten Draufsicht,
- Figur 4: das Fördersystem in einer Frontansicht im stationär-verriegelten Zustand, und
- Figur 5: das Fördersystem in einer Frontansicht mit einem schwenkbaren Mitnehmer im Eingriff mit einem Bauteilträger.

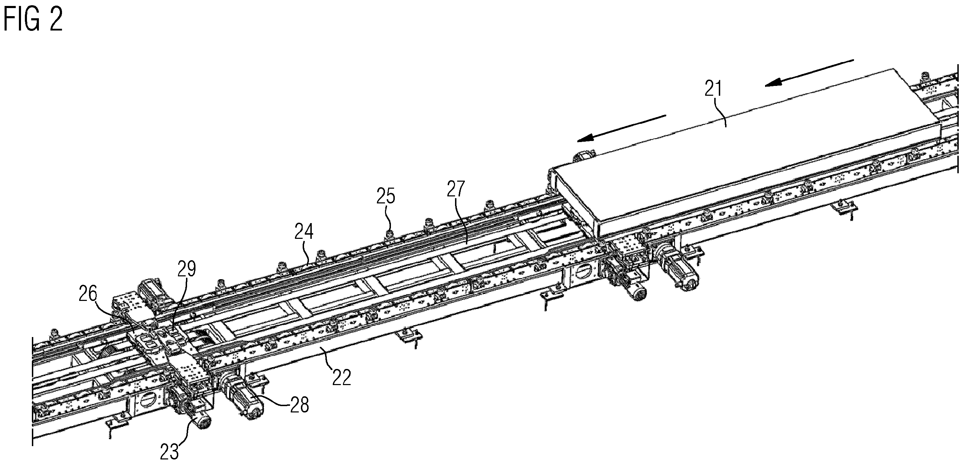

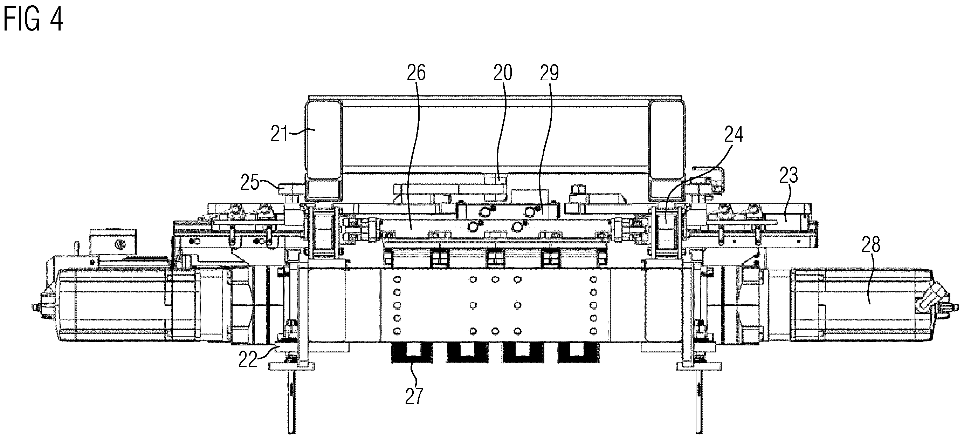

In den Figuren 2 bis 5 bezeichnen identische Bezugszeichen 20 - 29 immer auch dasselbe Bauteil.

Bei der hier gezeigten Ausführungsvariante erfolgt der getaktete Transport durch eine reversierende Bewegung eines elektromotorisch betätigen Mitnehmerschlitten. Alternativ ist auch ein umlaufender Betrieb möglich.

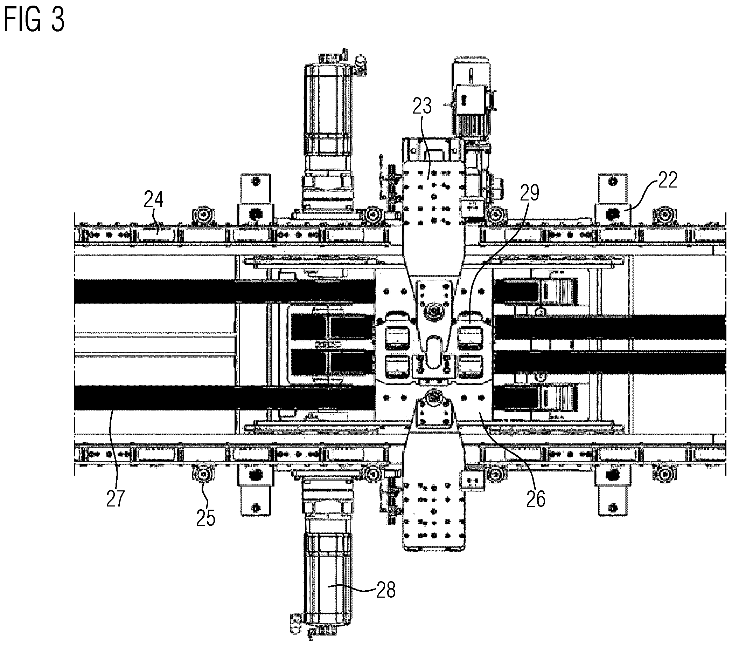

Das in den Figuren 2 - 5 gezeigte Fördersystem stellt einen vorteilhaften Entwurf des erfindungsgemäßen Gegenstands dar. Zur besseren Veranschaulichung werden jeweils nur Ausschnitte des Fördersystems gezeigt, wobei die eingezeichneten Pfeile in der Figur 3 die Förderrichtung visualisieren. Auf die Darstellung eines Bauteils (Last, z.B. eine Rohkarosserie in einer Fahrzeugfertigung), welches formschlüssig mit dem Bauteilträger 21 kontaktiert wäre, wird verzichtet. In einer nicht gezeigten Variante kann auch ein Fördergut direkt ohne Bauteilträger transportiert werden und stellt dann seinen eigenen Bauteilträger dar.

Alle hier gezeigten Lösungen basieren auf Tragrollen 24 und Laufleisten oder Führungsschlitten mit Führungsschienen, wobei diese so ausgeführt werden können, dass sowohl die Tragrollen oder Führungsschlitten wahlweise oder gemischt stationär oder am beweglichen Teil befestigt sein können.

Die hier gezeigten Systemkomponenten 23 - 29 werden an einem lasttragenden Trägerrahmen beziehungsweise Grundrahmen 22 montiert.

Die Antriebsbewegung geht bei der gezeigten Ausführungsvariante als Fördermittel von einem elektromotorisch angetriebenen Zahnriementrieb aus, der einen geführten Mitnehmerschlitten 26 mit einem darauf befestigten, schwenkbaren Mitnehmer 29 zwischen zwei Positionen reversierend bewegt, wobei sich die Fahrbereiche zweier Segmente des Fördersystems jeweils überschneiden. Genauer wird die Antriebseinheit 28 mit zwei zueinander mechanisch synchronisierten Elektromotoren umgesetzt, woraus, in Verbindung mit zwei parallel betriebenen Zahnriemen als Fördermittel 27, eine vorteilhafte Redundanz im Antriebsstrang resultiert. Sollte es keine Anforderungen hinsichtlich eines redundant ausgelegten Antriebsstrangs geben, so kann auf eine Lösung mit nur einem Zahnriemen und Antrieb zurückgegriffen werden. Der Antriebsstrang kann ebenso mit alternativen Fördermitteln konzipiert werden, die Antriebselemente wie Ketten, Spindeln oder Zahnstangentriebe verwenden oder auch eine Linearmotortechnik oder auf Fluidtechnik basierende Aktuatoren. Da die Wartungsaufgaben bei einem Zahnriementrieb sehr gering ausfallen, wurde dieses Antriebselement für die hier gezeigte erfindungsgemäße Ausführungsvariante gewählt.

In dem Bereich, in dem sich die Fahrbereiche und somit die Fördermittel zweier Segmente der Förderstrecke des Fördersystems überschneiden, erfolgt die Übergabe des Bauteilträgers 21 auf die nächste Fördereinheit und das dortige Fördermittel, also auf das nächste Segment des Fördersystems. Die dort definierte Übergabeposition stellt hier gleichzeitig die stationäre Bearbeitungspositionen dar. Bei der gezeigten Variante sind die zwei äußeren Zahnriemen mit einem ersten angetriebenen Mitnehmerschlitten und die beiden inneren Zahnriemen an dem nachfolgenden angetriebenen Mitnehmerschlitten befestigt, sodass diese unabhängig voneinander angesteuert werden können. Ein unsymmetrischer Aufbau des Zahnriementriebs, sodass die Mitnehmerschlitten aneinander vorbeifahrender können, wäre ebenfalls möglich.

Dieses Verkettungsprinzip der Segmente bzw. der Fördermittel wird über die gesamte Länge der Förderstrecke fortgesetzt.

Die Figur 3 zeigt als zentrales Element die stationäre Betätigungs- und Verriegelungseinheit 23, kurz Verriegelungseinheit 23 genannt.

Da der Bauteilträger 1 während der gesamten Zeit einen Formschluss entweder zu einem Verbindungsmittel 29 (im Folgenden auch Mitnehmer genannt) oder zur stationären Betätigungs- und Verriegelungseinheit 23 aufweist, kann die Bearbeitung des Bauteils, direkt nachdem die Förderbewegung abgeschlossen ist, beginnen. Der Rückhub des entriegelten Mitnehmerschlittens 26 wird dann während des Bearbeitungsprozess realisiert. Befindet sich dieser Mitnehmerschlitten 26 wieder in seiner Ausgangsposition, so kann sich der daran befestigte schwenkbare Mitnehmer 29 des Mitnehmerschlittens 26 mittels der Verriegelungseinheit 3 in das nächste Verbindungsmittel (Mitnehmerbolzen) am Bauteilträger 21 einschwenken. Der schwenkbare Mitnehmer 29 kann folglich eine zum Bauteilträger 21 hin verriegelte oder entriegelte Stellung einnehmen.

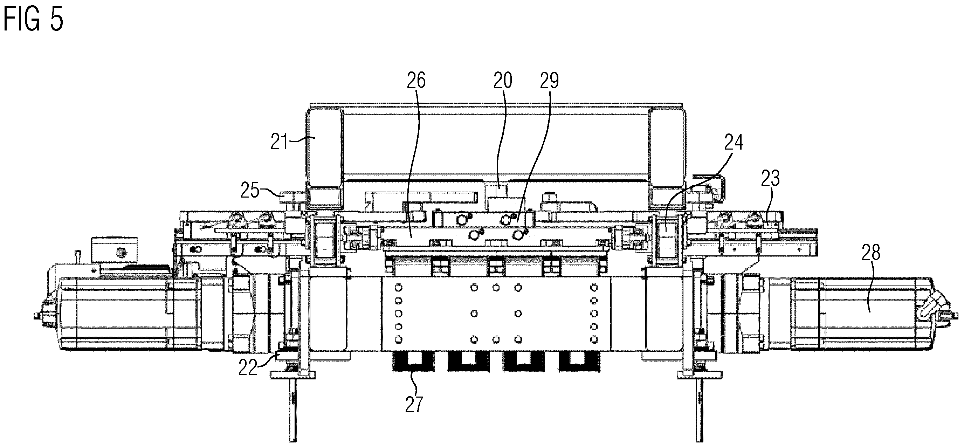

Die Figur 5 zeigt eine Frontansicht der erfindungsgemäßen Ausführungsvariante im stationärverriegeltem Zustand, bei der die Betätigungs- und Verriegelungseinheit 23 den Mitnehmerbolzen 20, also das Verbindungsmittel, formschlüssig umgreift.

Möglich sind auch Mitnehmervarianten, die so ausgeprägt sind, dass die Momentbelastung, welche aus dem Abstand des Zahnriemen 27 zum Mitnehmerbolzen 20 resultiert, von dem sind 21 und nicht von dem Mitnehmerschlitten 26 aufgenommen wird.

Ebenso wären hier anstelle des reversierenden Mitnehmers auch ein oder mehrere umlaufende Mitnehmer realisierbar, was jedoch eine aufwendigere Gestaltung des Antriebsstranges bedeuten und sich negativ auf den Bauraum auswirken würde. Sollte nur sehr wenig Bauraum quer zur Förderrichtung zur Verfügung stehen, wäre ein reversierendes Mitnehmerprinzip auf Basis von horizontal teleskopierenden Hubgabeln denkbar, jedoch ist dies ebenfalls mit einem erhöhten Fertigungsaufwand verbunden.

Weiterhin kann die bewegliche Mitnehmereinheit 26, 29 so gestaltet werden, dass keine externe Medienzuführung benötigt wird.

Die Positionserfassung des geführten und angetriebenen Mitnehmerschlittens 26 erfolgt hier indirekt über ein Winkelmesssystem an der elektromotorischen Antriebseinheit 28, denn bei einem zugmittelbetätigen und damit elastischen Antriebsstrang würde sich eine direkte Längenmessung des Fahrwegs negativ auf die Regelbarkeit und das Schwingverhalten des Antriebs und damit auch auf die Positioniergenauigkeit des Bauteilträgers auswirken. Weiterhin muss berücksichtigt werden, dass sich durch die Beschleunigungs- beziehungsweise Verzögerungskräfte die Zahnriemen dehnen. Da die Positionierbewegung beim Verzögern eine hohe Wiederholgenauigkeit erfordert, sollten die in Förderrichtung hinteren Synchronscheiben der Zahnriementriebs angetrieben werden. Dadurch wird vorteilhaft beim Verzögern der kürzere Trum des Zahnriementriebs belastet.

Als Sicherheitseinrichtung wird in der gezeigten Variante ein redundanter Antriebsstrang in Doppelmotor-Ausführung vorgeschlagen. Als Alternative wäre ein betätigter Überfahrschutz mit zustellbarer Dämpfertechnik zumindest am Ende des Förderabschnittes (Segments) denkbar.

Das bereits beschriebene Synchronisierungsproblem der Antriebe zwischen den Bearbeitungsstationen wird durch die Verwendung von nicht angetriebenen lasttragenden Tragrollen vermieden.

Sollte beispielsweise ein zusätzlicher Aushub des Bauteilträgers aufgrund einer besseren Zugänglichkeit für den Produktionsprozess erforderlich sein, kann der Bauteilträger direkt auf einem lasttragenden Mitnehmerschlitten 26 transportiert werden, sodass die Tragrollen 24 entfallen könnten.

Um den hohen Energiebedarf während der Beschleunigungs- und Verzögerungsphase zu puffern, sollte die Förderstrecke mit Energiespeichereinrichtungen ausgestattet werden. Diese können beispielsweise auf Kondensator- oder Sekundärbatterietechnik (Akkumulatoren) basieren, was für eine erhebliche Entlastung des Energieersorgungsnetz sorgen würde. Eine mechanisch wirkende Energiespeichereinrichtung in Form eines Schwungradspeichers ist ebenso denkbar, aber konstruktiv aufwendig.

Ein wesentlicher Aspekt der gezeigten Lösung liegt darin, ein auf Formschluss basierendes horizontales Fördersystem zu schaffen, welches hochdynamische Positionieraufgaben mit großen Massen und damit hohe Beschleunigungs- und Verzögerungskräften prozesssicher und wiederholgenau bei sehr kurzen Taktwechselzeiten realisieren kann. Konkret erfolgt die Förderbewegung dabei über einen elektromotorisch angetriebenen, stationszugeordneten Mitnehmer 26, 29, der formschlüssig mit dem Bauteilträger in Verbindung steht und dessen Position mittels eines Wegmesssystems direkt oder indirekt erfasst wird.

Auf eine kostenaufwändige, schwingungs- und störungsanfällige externe Wegmesstechnik am Bauteilträger kann demnach verzichtet werden.

Innerhalb der Bearbeitungsstationen erfolgt die Übergabe des Bauteilträgers mittels einer Zustellbewegung mittelbar oder unmittelbar auf den Mitnehmer der nächsten Station, wobei über den gesamten Bereich der erfindungsgemäßen Förderanlage der Bauteilträger mechanisch geführt bleibt, also durchgängig formschlüssig entweder mit einem Fördermittel oder einem feststehenden Bauteil verbunden ist.

Weitere Vorteile ergeben sich in der Gestaltung der Bauteilträger, die mit einfachen und robust gestalteten Mitnehmerelementen ausgestattet werden können, was sich, bezogen auf die große Anzahl der Bauteilträger in einer Fertigungsanlage und damit in einem Fördersystem, als großer wirtschaftlicher Vorteil erweist. Ebenso könnte der Bauteilträger im Bereich der Rückführstrecke oder im Fließbetrieb auf konventioneller Fördertechnik und damit nicht zwingend mit formschlüssiger Anbindung transportiert werden. Der erfindungsgemäße Gegenstand erlaubt sowohl eine kostengünstige Herstellung als auch einen wartungsarmen Betrieb des gesamten Fördersystems und kann mittels redundanter Bauweise so ausgeführt werden, dass eine hohe Zuverlässigkeit und damit Anlagenverfügbarkeit sichergestellt wird. In Verbindung mit geeigneten Energiespeichern, die den hohen Energiebedarf bzw. Energiefluß während der Beschleunigungs- und Verzögerungsphase des Fördervorgangs puffern können, ist die Erfindung eine Basis für eine zuverlässige und energieeffiziente Hochleistungsförderanlage für getaktete Serienfertigungen.

## Patentansprüche

1. Fördersystem für eine industrielle Fertigungsanlage,
mit einer Förderstrecke, die mit einem stationär angetriebenen linearen Fördermittel (27), insbesondere mit zumindest einem in Förderrichtung erstreckten Zahnriemen oder Kette, versehen ist,
wobei mittels des Fördermittels (27) ein Bauteilträger (21) entlang der Förderstrecke bewegbar ist,
**dadurch gekennzeichnet,**
**dass** der Bauteilträger (21) formschlüssig mit dem Fördermittel (27) verbindbar und vom Fördermittel (27) entkoppelbar ist,
**dass** mindestens eine stationäre Verriegelungseinheit (23) an der Förderstrecke vorgesehen ist, und
**dass** die Verriegelungseinheit (23) zum Entkoppeln des Bauteilträgers von dem Fördermittel (27) und zum Feststellen des Bauteilträgers (21) in einer fixierten Position in einem Arbeitszug eingerichtet ist.

2. Fördersystem nach Patentanspruch 1,
**dadurch gekennzeichnet,**
**dass** die Verriegelungseinheit (23) zum Ankoppeln des Bauteilträgers (21) an das Fördermittel (27) und zur Freigabe des Bauteilträgers (21) aus der fixierten Position in einem Arbeitszug eingerichtet ist.

3. Fördersystem nach Patentanspruch 1 oder 2,
**dadurch gekennzeichnet,**
**dass** die Verriegelungseinheit (23) derart ausgestaltet ist, dass während eines Abkoppelns und Feststellens des Bauteilträgers (21) und/oder während eines Ankoppelns und Freigabe des Bauteilträgers (21) eine ununterbrochene formschlüssige Führung des Bauteilträgers gegeben ist.

4. Fördersystem nach einem der vorhergehenden Patentansprüche,
**dadurch gekennzeichnet,**
**dass** die Förderstrecke des Fördersystems aus mehreren miteinander verketteten Segmenten besteht,
wobei jedes Segment mit dem oder einem anderen stationären angetriebenen linearen Fördermittel (27) versehen ist,
**dass** die stationäre Verriegelungseinheit (23) an einer Verbindungsstelle zweier Segmente derart angeordnet ist, dass eine Verbindung oder Entkopplung des Bauteilträgers (21) wahlweise mit oder von einem ersten oder einem zweiten der beiden Segmente des Fördermittels (27) möglich ist, wobei eine Übergabe des Bauteilträgers (21) zwischen den Segmenten vorgesehen ist, und
wobei zwischen der formschlüssigen Verbindung des Bauteilträgers (21) mit dem Fördermittel (27) des ersten und des zweiten Segments eine Feststellung des Bauteilträgers (21) vorgesehen ist.

5. Fördersystem nach einem der vorhergehenden Patentansprüche,
**dadurch gekennzeichnet,**
**dass** zur Feststellung des Bauteilträgers (21) eine formschlüssige Verbindung des Bauteilträgers (21) mit der Verriegelungseinheit (23) oder mit einem feststehenden Bauteil der Förderstrecke, insbesondere mit einem Tragrahmen oder Grundrahmen (22) der Förderstrecke, vorsehbar ist.

6. Fördersystem nach einem der vorhergehenden Patentansprüche,
**dadurch gekennzeichnet,**
**dass** die Verriegelungseinheit (23) ein bewegbares Bauteil, insbesondere einen quer zur Fahrtrichtung des Bauteilträgers (21) angeordneten Schieber, aufweist, wobei das Bauteil zum An- oder Abkoppeln an ein Verbindungsmittel (20) des Bauteilträgers (21), insbesondere einem Zapfen, ausgestaltet ist, und wobei das Bauteil zum Ab- oder Ankoppeln eines Mitnehmers des Fördermittels(27) an das oder ein anderes Verbindungsmittel (20)des Bauteilträgers (21) in demselben Bewegungsvorgang ausgestaltet ist.

7. Fördersystem nach einem der vorhergehenden Patentansprüche,
**dadurch gekennzeichnet,**
**dass** die Verrieglungseinheit (23) einen in Bezug auf die Längsrichtung des Förderers bezogenen Fangbereich aufweist, wobei der Fangbereich zum Ausgleich von Positionierungstoleranzen des Bauteilträgers (21) zum Zeitpunkt des Feststellens des Bauteilträgers (21) und/oder zum Ausgleich von Positionierungstoleranzen des Fördermittels (27) zum Zeitpunkt des Ankoppelns des Bauteilträgers (21) an das Fördermittel (27) eingerichtet ist.

8. Fördersystem nach einem der vorhergehenden Patentansprüche,
**dadurch gekennzeichnet,**
**dass** das Fördersystem über einen Energiespeicher verfügt, wobei der Energiespeicher zur zumindest teilweisen Speicherung der Bewegungsenergie des Bauteilträgers (21) und/oder anderer beweglicher Komponenten des Fördersystems, insbesondere des Fördermittels (27), im Zuge eines Verzögerungsvorgangs vor einer Verbindung mit der Verriegelungseinheit (23) eingerichtet ist, und wobei der Energiespeicher zur Einleitung der gespeicherten Energie nach dem Ankoppeln des Bauteilträgers (21) an das oder ein Fördermittel (27) eingerichtet ist, und
wobei zur Steuerung des Zeitpunktes des Beginns der Einleitung der Energie ein Sensor an der Verriegelungseinheit (23) zur Abtastung des Kopplungszustandes der Verriegelungseinheit (23) vorgesehen ist.

9. Fördersystem nach einem der vorhergehenden Patentansprüche,
**dadurch gekennzeichnet,**
**dass** das Fördersystem einen variablen Vortrieb des Fördermittels (27) aufweist, wobei der variable Vortrieb so gesteuert ist, dass das Fördermittel (27) zum Zeitpunkt des Verbindens des Bauteilträgers (21) mit der Verriegelungseinheit (23) und zum Zeitpunkt des Koppelns des Bauteilträgers (21) an das Fördermittel (27) stillsteht.
